Europäisches Patentamt

European Patent Office  (11) Publication number: **0 242 791**

Office européen des brevets  **B1**

(12) **EUROPEAN PATENT SPECIFICATION**

(45) Date of publication of patent specification: 27.06.90  (51) Int. Cl.⁵: **C 08 F 26/02**

(21) Application number: **87105606.5**

(22) Date of filing: **15.04.87**

(54) **Process for producing polymers of monoallylamine.**

(30) Priority: **25.04.86 US 855940**

(43) Date of publication of application:
**28.10.87 Bulletin 87/44**

(45) Publication of the grant of the patent:
**27.06.90 Bulletin 90/26**

(84) Designated Contracting States:
**AT BE CH DE FR GB IT LI LU NL SE**

(56) References cited:
**EP-A-0 145 220**
**GB-A- 607 735**
**GB-A- 629 093**

(73) Proprietor: **ETHYL CORPORATION**
**Ethyl Tower 451 Florida Boulevard**
**Baton Rouge Louisiana 70801 (US)**

(72) Inventor: **Blocker, Wesley Clinton**
**8777 Sharlane**
**Baton Rouge, LA 70809 (US)**
Inventor: **Roark, David Neal**
**5130 Spotsylvania**
**Baton Rouge, LA 70817 (US)**
Inventor: **Hornbaker, Edwin Dale**
**10968 Worthington Avenue**
**Baton Rouge, LA 70815 (US)**

(74) Representative: **Dipl.-Ing. Schwabe, Dr. Dr.**
**Sandmair, Dr. Marx**
**Stuntzstrasse 16**
**D-8000 München 80 (DE)**

Courier Press, Leamington Spa, England.

EP 0 242 791 B1

**Description**

This invention relates to a process for producing polymers of monoallylamine, $CH_2=CHCH_2NH_2$.

Until the recent work of Harada and co-workers (*Makromol. Chem., Rapid Commun. 5*, 27—31 (1984); U.S. Pat Nos. 4,504,640, 4,528,347 and 4,540,760, no commercially feasible process existed for producing poly(monoallyline) or salts thereof. Although many attempts had been made to produce such materials (see Ochiai et al, *Makromol. Chem., 186*, 2547—2556 (1985) as well as the work reported and discussed as background in these U.S. patents of Harada et al), such attempts were largely unsuccessful. For exmaple, previous attempts to polymerize monoallylamine with radical or ionic initiators resulted at best in the formation in low yield of polymers having a low degree of polymerization.

This invention provides a new, highly effective process by which monoallylamine polymers of suitably high molecular weight can be produced in good yield. This is accomplished by conducting the polymerization of a monoallylamine salt in an aqueous medium in the presence of a multivalent metal ion-hydrogen peroxide polymerization initiator.

Although not essential to the practice of this invention, it is preferred to introduce hydrogen peroxide either continuously or periodically during a substantial portion of the polymerization reaction. It is believed that such modes of incremental addition insure the maintenance within the reaction system of a suitable quantity of the active catalytic species that serve as the polymerization initiator. Likewise it is preferred, though not essential, to keep the concentration of multivalent metal ion relatively low as this enhances polymerization rate and yield of polymer. For example, when using a water-soluble iron salt as the source of multivalent ion, it is desirable to use no more than about 200 parts of iron per million parts by weight of monoallylamine salt present in the polymerization system. If higher amounts of iron are used, a suitable water-soluble complexing agent such as a water-soluble pyrophosphate salt (for example, sodium or potassium pyrophosphate) is preferably employed as an additional component of the initiator system.

This invention should not be confused with the polymerization process described by D. H. Solomon and C. D. McLean in U.S. Pat. No. 3,957,699 in which allyl amine containing two or more allyl groups is polymerized in the presence of a free radical initiator which yields only uncharged fragments, and which preferably is a redox system of a transition metal selected from the group consisting of $Fe^{++}$ and $Ti^{+++}$ with hydrogen peroxide, hydroxylamine or an organic hydroperoxide. As compared to salts of monoallylamine, salts of triallylamine and of diallylamine are relatively easy to polymerize with quite a wide variety of initiator systems, such as the persulfate-bisulfite combination, transition metals with *tert*-butylhydroperoxide and azo-bis-isobutyramidinium hydrochloride as well as the free radical initiator systems described by Solomon and McLean referred to above. In contrast, it has been found for example that the persulfate-bisulfite or ferric ion-*tert*-butylhydroperoxide systems are not useful for polymerizing monoallylamine hydrochloride. Presumably, the greater ease of polymerizing triallylamine hydrochloride and diallylamine hydrochloride is due to a relatively rapid cyclopolymerization involving two allyl groups of the monomer, a route which is not available to monoallylamine [cf., C. D. McLean et al, *J. Macromol. Sci.-Chem.*, A10(5), p. 864—865 (1976)].

The practice and advantages of this invention are typified by the following illustrative examples in which all parts and percentages are by weight and all times are in hours. In these examples the following experimental procedure was used: To either a 100 ml two-necked round bottom flask or a 250 ml three-necked round bottom flask fitted with a reflux condenser, thermometer and catalyst addition tube attached to a syringe pump was added either 50 ml or 100 ml of aqueous monoallylamine hydrochloride solution (of the concentration shown in the Table), the appropriate amount of the transition metal compound (either as a solid or as a 0.1 wt% aqueous solution) and, when used, the specified amount of sodium pyrophosphate (introduced in the form of the decahydrate). Oxygen was removed from the flask by evacuating three times to a pressure equal to the vapor pressure of the reaction mixture and holding at that pressure for five minutes while allowing the solution to boil and then breaking the vacuum each time by the addition of nitrogen. The reaction mixture was then heated to the desired temperature and the catalyst solution (30% aqueous solution of $H_2O_2$ in all cases except Comparative Example 22 in which a 70% aqueous solution of *tert*-butyl hydroperoxide was used) was injected at a constant pump rate such as to provide at the end of the injection time the amount of hydrogen peroxide shown in the Table. (In Example 1, all of the $H_2O_2$ was charged initially before the evacuation). At the end of the reaction period, the conversion to polymer was determined by NMR measurement of unreacted monomer content. The viscosity of the product solution, which is an indication of the polymer molecular weight, was measured with a Brookfield viscometer, model LVT (Brookfield Engineering Laboratories, Stoughton, Massachusetts) using either spindle No. 4 or 6. In Examples 4, 6, 10, 16, 20, 21, and 22 the initial reaction solution contained 0.1 percent by weight of sodium pyrophosphate decahydrate. Sodium pyrophosphate decahydrate was also added to the initial reaction solutions of Example 13 (0.5 wt%) and 14 (0.15 wt%). The data obtained are shown in the ensuing Table, wherein the following abbreviations are used:

EP 0 242 791 B1

Ex No = Example number
Sol'n = solution
Conc = concentration
Amt. = amount
Temp. = temperature
Conv. = conversion

### Table – Polymerization of Monoallylamine Hydrochloride

| Ex No | Initial Sol'n Metal Source | Metal Conc* | Injections Initiator Amt., % | Time hrs. | Run Time hrs. | Temp. °C | Final Sol'n Conv. % | Poly-mer % | Viscosity cps |
|---|---|---|---|---|---|---|---|---|---|
| 1 | FeCl₃ | 500 | 2.0 | 0 | 1 | 50–70 | (a) | (b) | (b) |
| 2 | FeCl₃ | 500 | 5.0 | 28 | 72 | 50 | 52 | (b) | (b) |
| 3 | FeCl₃ | 350 | 5.0 | 70 | 70 | 40 | 68 | 43 | 100 |
| 4 | FeCl₃ | 350 | 5.0 | 60 | 64 | 55 | 78 | 49 | 620 |
| 5 | FeCl₃ | 350 | 5.0 | 60 | 64 | 25 | (a) | (b) | (b) |
| 6 | FeCl₃ | 350 | 5.0 | 70 | 70 | 50 | 89(c) | 55 | 560 |
| 7 | FeCl₃ | 350 | 5.0 | 70 | 70 | 50 | 75(d) | 47 | 200 |
| 8 | FeCl₃ | 170 | 5.0 | 70 | 70 | 50 | 92 | 58 | 600 |
| 9 | FeCl₃ | 3.5 | 5.0 | 70 | 70 | 50 | 92 | 57 | 540 |
| 10 | FeCl₂ | 350 | 5.0 | 70 | 70 | 50 | 82 | 51 | 720 |
| 11 | FeCl₃ | .35 | 5.0 | 70 | 70 | 50 | 46 | 29 | 40 |
| 12 | FeCl₃ | 1.7 | 5.0 | 70 | 70 | 50 | 71 | 44 | 90 |
| 13 | FeCl₃ | 190 | 5.3 | 70 | 70 | 48 | 90 | 52 | 110 |
| 14 | FeCl₃ | 50 | 5.3 | 70 | 70 | 47 | 87 | 50 | 70 |
| 15 | FeCl₂ | 5 | 5.3 | 70 | 70 | 43 | 70 | 41 | 40 |
| 16 | FeCl₃ | 370 | 5.3 | 70 | 70 | 50 | 89 | 52 | 160 |
| 17 | CoCl₂ | 3.7 | 5.0 | 70 | 70 | 50 | 77 | 48 | 120 |
| 18 | FeCl₃ | 688 | 10.0 | 8 | 8 | 60 | 44 | 24 | (b) |
| 19 | FeCl₃ | 688 | 7.5 | 24 | 40 | 50 | 69 | 41 | 104 |
| 20 | FeCl₃ | 344 | 7.5 | 92 | 92 | 50 | 96 | 55 | 280 |
| 21 | FeCl₃ | 344 | 10.0 | 92 | 92 | 50 | 99.5 | 56 | 304 |

3

EP 0 242 791 B1

### Table – Polymerization of Monoallylamine Hydrochloride

(Continued)

| Ex No | Initial Sol'n Metal Source | Metal Conc* | Injections Initiator Amt., % | Time hrs. | Run Time hrs. | Temp. °C | Conv. % | Final Sol'n Poly- mer % | Viscosity cps |
|---|---|---|---|---|---|---|---|---|---|
| 22 | FeCl$_3$ | 344 | 5.0(e) | 19 | 23 | 50 | none | none | (b) |
| 23 | MnCl$_2$ | 370 | 5.3 | 70 | 70 | 48 | 40 | 24 | 20 |
| 24 | CuCl$_2$ | 370 | 5.3 | 70 | 70 | 48 | 34 | 20 | 20 |

- - - - - - -

    \* Parts per million parts by weight (ppm) of monoallylamine hydrochloride

(a) Very low (not measured quantitatively)

(b) Not measured

(c) 77% conversion at 48 hours

(d) 65% conversion at 48 hours

(e) *Tert*—butyl hydroperoxide used in lieu of hydrogen peroxide

    The polymerization process of this invention may be used to produce homopolymers or copolymers of monoallylamine, and in either case the polymers may be linear polymers (that is, uncrosslinked), branched polymers, or the copolymers may be lightly crosslinked polymers. Copolymers produced in accordance with this invention will contain a minor proportion, normally 20% by weight or less and most preferably 10% or less, of one or more monomers, such as diallylamine, copolymerizable with monoallylamine or its salts. When producing branched or crosslinked polymers pursuant to this invention it is desirable to introduce into the polymerization system a suitable quantity of a crosslinking agent, such as N,N,N',N'-tetraallyl-1,6-hexanediamine, N,N,N',N'-tetraallyl-1,4-butanediamine, N,N,N',N',N'',N''-hexaallylmelamine, or N,N,N'-triallyl-1,6-hexanediamine. When producing water-dispersible crosslinked polymers, the amount of cross-linking agent should be kept below about five mole percent, or in some cases below about two mole percent, of the monoallylamine monomer employed. Larger amounts of crosslinking agents tend to form products having reduced water dispersibility.

    The foregoing Examples demonstrate that a variety of multivalent metal sources may be used under a variety of reaction conditions in the practice of this invention. The prime requirements of a candidate metal source of the initiator are that it be soluble in aqueous media and have the capability of existing in different valence states. Once a material meeting these criteria has been selected, it is a simple matter to subject it to a test using the procedures given in the above Examples to determine whether or not it may be effectively utilized pursuant to this invention. For example water-soluble iron salts can yield ferrous or ferric ions and thus are highly suitable for use in producing the initiator systems of this invention. Other suitable and potentially suitable multivalent metal sources include the water soluble salts or complexes of titanium, vanadium, chromium, manganese, cobalt, copper, germanium, niobium, molybdenum, ruthenium, tin, antimony, tellurium, cerium, neodymium, osmium, iridium, platinum, gold, mercury, thallium, lead, and uranium. Such metal compounds may be employed in any available water-soluble form, including the halides, nitrates, phosphates, sulfates, hydroxides, chlorates, perchlorates, formates, acetates, bromates, and iodates. The suitability of any given potential source of multivalent ions can be readily ascertained by determining its water solubility and if necessary by the simple expedient of performing an experiment using the general procedure described above.

    Hydrogen peroxide is available in the form of aqueous solutions of different concentrations, any of which may be used.

4

# EP 0 242 791 B1

Preferably the reaction medium is composed predominantly or exclusively of water, although other aqueous media may be used such as mixtures of water and water-miscible alcohols or glycols, inorganic acids (such as hydrochloric, nitric or sulfuric acid), acetic acid, N-methylpyrrolidone or other water-miscible organic compounds which do not have a particularly adverse effect on free radical polymerization.

The monoallylamine is introduced into the polymerization system, preferably as an aqueous solution, in the form of a water soluble salt of monoallylamine, such as the hydrochloride, hydrobromide, hydrofluoride, hydrogen phosphate, dihydrogen phosphate, nitrate, or bisulfate salts. It is possible, however, to conduct the polymerization with monoallylamine itself in those cases in which the reaction medium contains a strong inorganic acid.

Polymerization temperatures used will generally fall in the range of 30°C to 80°C.

Various complexing agents may be used in conjunction with the initiator systems of this invention to control the concentration of free multivalent metal ion within the system. As noted above, if the concentration of such ion becomes excessive, the efficacy of the initiator system may be impaired. Among the complexing agents that may be used are sodium pyrophosphate, potassium pyrophosphate, sodium ethylenediamine tetraacetate, and sodium citrate.

While variations in concentrations and proportions are possible, generally the polymerization system will contain from 1 to 700 and preferably from 3 to 200 parts by weight of free (that is, uncomplexed) multivalent metal ion per million parts of monoallylamine salt present in the system. To the system will usually be added from 3 to 15 and preferably from 5 to 10 weight percent of hydrogen peroxide based on the amount of monoallylamine salt present in the system. When a complexing agent is employed in the system, the amount used will usually fall in the range of 0.1 to 0.5 mol per gram atom of multivalent metal ion. Suitable and optimum concentrations and proportions of the catalyst components may be expected to vary at least to some extent from metal ion to metal ion.

As this invention is susceptible of considerable variation, the forms and embodiment hereinbefore described being merely illustrative thereof, it is not intended that this invention be limited except within the spirit and scope of the following claims.

**Claims**

1. A process of producing a polymer of monoallylamine which comprises polymerizing monoallylamine in an aqueous reaction medium in the presence of a multivalent metal ion-hydrogen peroxide polymerization initiator.

2. The process as claimed in Claim 1 in which the multivalent metal ion of the polymerization initiator is iron, cobalt, manganese or copper.

3. The process as claimed in Claim 1 in which hydrogen peroxide is introduced into the reaction medium periodically or continuously during the polymerization.

4. The process as claimed in Claim 1 in which the reaction medium additionally contains a complexing agent to control the concentration of free metal ion in the medium.

5. The process as claimed in Claim 4 in which the complexing agent is sodium pyrophosphate or potassium pyrophosphate.

6. The process as claimed in Claim 1 in which the monoallylamine is introduced into the reaction medium in the form of an aqueous solution of a water soluble salt of monoallylamine.

7. The process as claimed in Claim 1 in which the monoallylamine is introduced into the reaction medium in the form of an aqueous solution of monoallylamine hydrochloride.

8. The process as claimed in Claim 1 in which the monoallylamine is introduced into the reaction medium in the form of an aqueous solution of at least one water soluble salt of monoallylamine and is homopolymerized therein.

9. The process as claimed in Claim 1 in which the monoallylamine is introduced into the reaction medium in the form of an aqueous solution of at least one water soluble salt of monoallylamine and is copolymerized therein with 10% by weight or less of one or more allyl comonomers copolymerisable therewith.

10. The process as claimed in Claim 9 in which said comonomer is diallylamine.

**Patentansprüche**

1. Verfahren zur Herstellung eines Polymers von Monoallylamin, umfassend die Polymerization von Monoallylamin in einem wäßrigen Reaktionsmedium in Gegenwart eines ein mehrwertiges Metallion und Wasserstoffperoxid umfassenden Polymerisationsinitiators.

2. Verfahren nach Anspruch 1, worin das mehrwertige Metallion des Polymerisationsinitiators Eisen, Cobalt, Mangan oder Kupfer ist.

3. Verfahren nach Anspruch 1, worin Wasserstoffperoxid dem Reaktionsmedium periodisch oder kontinuierlich während der Polymerisation zugesetzt wird.

4. Verfahren nach Anspruch 1, worin das Reaktionsmedium zusätzlich ein Komplexierungsmittel zur Kontrolle der Konzentration an freiem Metallion im Medium enthält.

5

5. Verfahren nach Anspruch 4, worin das Komplexierungsmittel Natriumpyrophosphat oder Kaliumpyrophosphate ist.

6. Verfahren nach Anspruch 1, worin das Monoallylamin in form einer wäßrigen Lösung eines wasserlöslichen Salzes von Monoallylamin in das Reaktionsmedium eingeführt wird.

7. Verfahren nach Anspruch 1, worin das Monoallylamin in Form einer wäßrigen Lösung von Monoallylaminhydrochlorid in das Reaktionsmedium eingeführt wird.

8. Verfahren nach Anspruch 1, worin das Monoallylamin in Form einer wäßrigen Lösung wenigstens eines wasserlöslichen Salzes von Monoallylamin in das Reaktionsmedium eingeführt und darin einer Homopolymerisation unterworfen wird.

9. Verfahren nach Anspruch 1, worin das Monoallylamin in Form einer wäßrigen Lösung wenigstens eines wasserlöslichen Salzes von Monoallylamin in das Reaktionsmedium eingeführt und darin mit 10 Gew.-% oder weniger eines oder mehrerer Allyl-Comonomere copolymerisiert wird, die damit copolymerisierbar sind.

10. Verfahren nach Anspruch 9, worin das Comonomer Diallylamin ist.

## Revendications

1. Procédé pour produire un polymère de monoallylamine qui comporte la polymérisation de la monoallylamine dans un milieu réactionnel aqueux, en présence d'un initiateur de polymérisation ion métallique plurivalent-peroxyde d'hydrogène.

2. Procédé selon la revendication 1, dans lequel l'ion métallique plurivalent de l'initiateur de polymérisation est un ion de fer, de cobalt, de manganèse ou de cuivre.

3. Procédé selon la revendication 1, dans lequel le peroxyde d'hydrogène est introduit dans le milieu réactionnel périodiquement ou continûment pendant la polymérisation.

4. Procédé selon la revendication 1, dans lequel le milieu réactionnel contient en outre un agent complexant pour contrôler la concentration en ion métallique libre dans le milieu.

5. Procédé selon la revendication 4, dans lequel l'agent complexant est le pyrophosphate de sodium ou le pyrophosphate de potassium.

6. Procédé selon la revendication 1, dans lequel la monoallylamine est introduite dans le milieu réactionnel sous la forme d'une solution aqueuse d'un sel de monoallylamine soluble dans l'eau.

7. Procédé selon la revendication 1, dans lequel la monoallylamine est introduite dans le milieu réactionnel sous la forme d'une solution aqueuse d'hydrochlorure de monoallylamine.

8. Procédé selon la revendication 1, dans lequel la monoallylamine est introduire dans le milieu réactionnel sous la forme d'une solution aqueuse d'au moins un sel de monoallylamine soluble dans l'eau et y est homopolymérisée.

9. Procédé selon la revendication 1, dans lequel la monoallylamine est introduite dans le milieu réactionnel sous la forme d'une solution aqueuse d'au moins un sel de monoallylamine soluble dans l'eau et y est copolymérisée avec 10% en poids au moins d'un ou plusieurs comonomères allyliques pouvant être copolimérisés avec celle-ci.

10. Procédé selon la revendication 9, dans lequel le dit comonomère est la diallylamine.